# EUROPÄISCHE PATENTANMELDUNG

(11) **EP 1 536 534 A2**
(43) Veröffentlichungstag der Anmeldung: **01.06.2005**
(21) Anmeldenummer: 04026404.6
(22) Anmeldetag: 06.11.2004
(51) Int. Cl.: H02G 3/38

(54) **Anschlussmodul für Unterflurverkabelungen**

(30) Priorität: 27.11.2003 DE 20318353 U
(71) Anmelder: Tehalit GmbH, 67716 Heltersberg (DE)
(72) Erfinder: Kauf, Peter, 66482 Zweibrücken (DE); Schneckmann, Horst, 67705 Trippstadt (DE); Szabo, Thomas, 66849 Landstuhl (DE)
(74) Vertreter: Patentanwälte Möll und Bitterich

(57) **Zusammenfassung**

Gegenstand der Erfindung sind Anschlussmodule für die Unterflurverkabelung von Starkstromnetzen.

Das Anschlussmodul besteht aus einem Montageprofil (10) mit Frontplatte (11), stirnseitigen Haltevorrichtungen (12) und Ausschnitten für Steckdosen (20) sowie einem Becher (15). Die Steckdosen (20) sind Flachsteckdosen, wobei jeweils drei Steckdosen (20) eng benachbart und parallel nebeneinander stehend montiert sind. Das Montageprofil (10) ist lösbar auf den Becher (15) aufgerastet.

## Beschreibung

Die Erfindung betrifft Anschlussmodule für die Unterflurverkabelung von Starkstromnetzen gemäß dem Oberbegriff des Anspruchs 1.

Unterflur-Verkabelungen und dafür verwendbare Geräte sind in großen Stückzahlen in den unterschiedlichsten Ausgestaltungen seit Jahrzehnten im Einsatz. Diese Systeme und die dazugehörigen Geräte gibt es sowohl für die Starkstromversorgung als auch für Daten- und Telekommunikationsnetze.

Eine universell verwendbare Unterflur-Gerätedose zeigt die DE 25 16 524 A.

Eine Unterflur-Gerätedose, die sowohl für Starkstrom- als auch für Schwachstromnetze vorbereitet ist, zeigt die DE 195 01 339 C.

Die DE 200 16 343 U zeigt eine Geräteaufnahme für eine Unterflur-Gerätedose. Diese Geräteaufnahme besteht aus einer Unzahl von Einzelteilen, was zu einer zeitund damit kostenaufwändigen Montage führt. Diese Geräteaufnahme ist nur für Daten- und Telekommunikationsnetze geeignet.

Ein Anschlusssystem für Unterflur-Verkabelungen von Daten- und Telekommunikationsnetzen ist auch bekannt aus der DE 202 04 093 U. In einer Unterflur-Gerätedose sind parallel nebeneinander zwei Geräteaufnahmen angebracht, wobei jede Geräteaufnahme drei Untereinheiten aufweist und jede Untereinheit drei parallel nebeneinander angeordnete Datensteckdosen.

Den vorstehend beschriebenen Geräteaufnahmen für Daten- und Telekommunikationsnetze ist gemeinsam, dass die Steckdosen in einem Winkel von ca. 30 Grad zur Frontfläche angeordnet sind. Dies ermöglicht eine platzsparende Anordnung der Steckdosen und der Stecker, so dass eine Vielzahl von Steckverbindungen untergebracht werden kann. Bei der oben beschriebenen Geräteaufnahme für Starkstromanschluss dagegen ist die Einsteckvorrichtung der Steckdose senkrecht zu der Frontfläche, so dass in der Geräteeinbaudose nur eine geringe Anzahl von Steckverbindungen realisiert werden kann. Das ist unbefriedigend.

Der vorliegenden Erfindung liegt daher die Aufgabe zugrunde, ein Anschlussmodul für Unterflur-Verkabelungen von Starkstromnetzen anzugeben, welches eine Vielzahl von Starkstrom-Steckverbindungen ermöglicht.

Diese Aufgabe wird gelöst durch ein Anschlussmodul mit den Merkmalen des Anspruchs 1.

Dank der vorliegenden Erfindung ist es möglich, in einer handelsüblichen Unterflur-Gerätedose eine weitaus größere Anzahl von Starkstrom-Anschlüssen zu realisieren, als dies bisher möglich war, ohne dass die elektrische Sicherheit darunter leidet. Dabei können die Anschlüsse entweder gruppenweise gemeinsam oder getrennt abgesichert werden.

Gemäß einer Weiterbildung der Erfindung sind die Flachsteckdosen von hinten in die Ausschnitte des Montageprofils eingesetzt. Dadurch ist es möglich, die Starkstromkabel an die Steckdosen anzuschließen, bevor diese in das Montageprofil eingerastet werden.

Vorteilhafterweise besitzt der für die elektrische Sicherheit verantwortliche Becher einen geschlossenen Boden. Vorbereitete Kabeldurchführungen ermöglichen das Durchführen der Unterflur-Verkabelung.

Zur Erleichterung der Montage und Demontage ist der Becher mit dem Montageprofil lösbar verrastet.

Zur Verrastung des Anschlussmoduls in der handelsüblichen Unterflur-Gerätedose sind angeformte Rastvorrichtungen vorgesehen. Diese können am Becher und/oder am Montageprofil angeformt sein.

Anhand der Zeichnung soll die Erfindung in Form eines Ausführungsbeispiels näher erläutert werden. Es zeigen jeweils in isometrischer Darstellung
- Fig. 1: ein komplettes Anschlussmodul und
- Fig. 2: ein leeres Montageprofil.

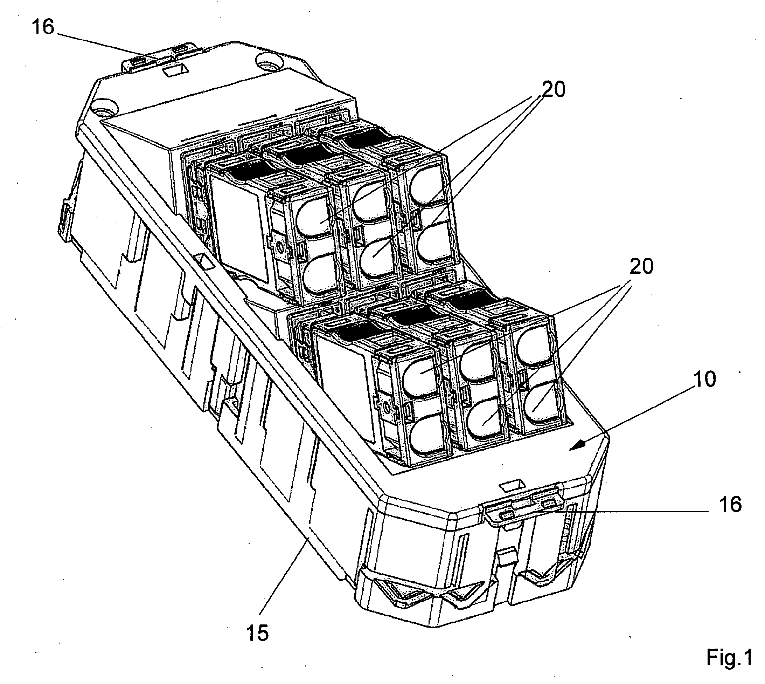

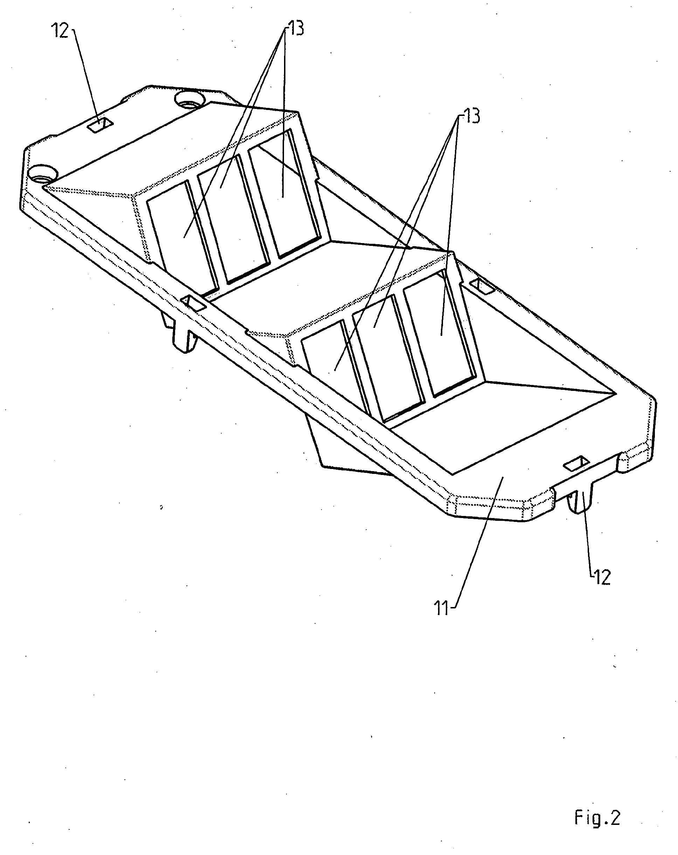

Fig. 1 zeigt in isometrischer Ansicht ein fertig bestücktes und montiertes Anschlussmodul für die Unterflur-Verkabelung von Starkstromnetzen, Fig. 2 das dazugehörige leere Montageprofil.

Das in Fig. 2 dargestellte Montageprofil 10 bildet in Verbindung mit dem in Fig. 1 dargestellten und von unten aufgerasteten Becher 15 die Hauptkomponenten des Anschlussmoduls. Das Montageprofil 10 besteht aus einer Frontplatte 11 mit zwei Gruppen von jeweils drei parallel und möglichst eng nebeneinander angeordneten rechteckigen Ausschnitten 13 für Starkstrom-Steckdosen 20, die als Flachstecker realisiert sind. Die Steckrichtung der Flachstecker liegt in einem Winkel von ca. 30 Grad zur Frontfläche 11, die Flachstecker stehen hochkant.

An den beiden Enden der Frontfläche 11 befinden sich Rastvorrichtungen 12, die mit entsprechenden Vorrichtungen an der Schürze 15 kooperieren.

An der Schürze 15 sind stirnseitig Rastvorrichtungen 16 vorgesehen, die mit entsprechenden Einrichtungen an den handelsüblichen Unterflurgerätedosen kooperieren. Diese Rasteinrichtungen 16 können alternativ auch an den Stirnseiten der Frontfläche 11 angebracht sein.

## Patentansprüche

1. Anschlussmodul für die Unterflur-Verkabelung von Starkstromnetzen, umfassend
- ein Montageprofil (10) mit
― Frontplatte (11),
― stirnseitigen Haltevorrichtungen (12)
― und Ausschnitten (13) für Steckdosen (20),
- und einen Becher (15) unter dem Montageprofil (10),
**gekennzeichnet durch** das Merkmal:
- die Steckdosen (20) sind Flachsteckdosen,
- jeweils drei Steckdosen (20) sind eng benachbart parallel nebeneinander montiert,
- die Steckdosen (20) stehen in einem Winkel von ca. 20 bis 50 Grad zur Frontplatte (11).

2. Anschlussmodul nach Anspruch 1, **gekennzeichnet durch** das Merkmal:
- die Flachsteckdosen (20) sind von hinten in die Ausschnitte (13) eingesetzt.

3. Anschlussmodul nach Anspruch 1 oder 2, **gekennzeichnet durch** die Merkmale:
- der Becher (15) besitzt
― einen geschlossenen Boden
― und Durchführungen für elektrische Kabel und Leitungen.

4. Anschlussmodul nach einem der Ansprüche 1 bis 3, **gekennzeichnet durch** das Merkmal:
- der Becher (15) ist mit dem Montageprofil (10) lösbar verrastet.

5. Anschlussmodul nach einem der Ansprüche 1 bis 4, **gekennzeichnet durch** das Merkmal:
- an dem Becher (15) sind Rastvorrichtungen (16) zur Befestigung in einer Unterflurgerätedose angeformt.

6. Anschlussmodul nach einem der Ansprüche 1 bis 4, **gekennzeichnet durch** das Merkmal:
- an dem Montageprofil (10) sind Rastvorrichtungen (16) zur Befestigung in einer Unterflurgerätedose angeformt.

7. Anschlussmodul nach einem der Ansprüche 1 bis 6, **gekennzeichnet durch** das Merkmal:
- die Steckdosen (20) stehen hochkant.
